# EUROPEAN PATENT APPLICATION

(11) **EP 4 779 301 A1**
(43) Date of publication of application: **22.07.2026**
(21) Application number: 26151042.4
(22) Date of filing: 09.01.2026
(51) Int. Cl.: G01N 29/04, G01N 29/24

(54) **LASER ULTRASOUND INSPECTION APPARATUS AND METHOD**

(30) Priority: 21.01.2025 JP 2025008337
(71) Applicant: DAIHEN Corporation, Yodogawa-ku Osaka-shi Osaka 532-8512 (JP); The University of Osaka, Osaka 565-0871 (JP)
(72) Inventor: NITTA, Seiya, Osaka 532-8512 (JP); KADOTA, Keiji, Osaka 532-8512 (JP); ERA, Tetsuo, Osaka 532-8512 (JP); ASAI, Satoru, Osaka 565-0871 (JP); NOMURA, Kazufumi, Osaka 565-0871 (JP)
(74) Representative: Zacco GmbH

(57) **Abstract**

An inspection apparatus (100) performs a surface process of irradiating a receive position (W1) with a transmitting laser. Subsequently, inspection apparatus (100) performs an inspection process of determining presence or absence of an anomaly of a workpiece (W).

## Description

### CROSS REFERENCE TO RELATED APPLICATIONS

This nonprovisional application is based on Japanese Patent Application No. 2025-008337 filed on January 21, 2025 with the Japan Patent Office, the entire content of which is hereby incorporated by reference.

### BACKGROUND OF THE INVENTION

### Field of the Invention

The present disclosure relates to an inspection apparatus, and an inspection method, and, more particularly, to an inspection apparatus, and an inspection method that inspect a workpiece to be inspected.

### Description of the Background Art

For example, Japanese Patent Laying-Open No. 2023-20336 discloses a welding inspection apparatus using laser-ultrasonics, for detecting an internal defect of a welding joint by lap fillet welding, which is used for welding a thin sheet. The welding inspection apparatus irradiates transmitting points on a welding joint with a transmitting laser beam for generating an ultrasonic wave inside an inspection target. The welding inspection apparatus also irradiates a receiving point on the inspection target with a receiving laser for detecting the ultrasonic wave. Furthermore, the welding inspection apparatus interferometrically measures the reflected light of the receiving laser to determine the presence or absence of an internal defect of a welding joint based on a result of the measurement.

The welding inspection apparatus also polishes the receiving point with tools such as a brush to improve the reception sensitivity of the receiving laser.

### SUMMARY OF THE INVENTION

The welding inspection apparatus that improves the reception sensitivity of the receiving laser is required to have improved workpiece inspection accuracy, while reducing the part count.

An object of the present disclosure is to improve the workpiece inspection accuracy, while reducing the part count.

An inspection apparatus according to the present disclosure inspects a workpiece to be inspected. The inspection apparatus includes a first irradiation device, a second irradiation device, an interferometer, and a controller. The first irradiation device irradiates a transmit position on a surface of the workpiece with a transmitting laser for generating an ultrasonic wave into the workpiece. The second irradiation device irradiates a receive position on the surface of the workpiece with a receiving laser for detecting the ultrasonic wave. The interferometer interferometrically measures reflected light of the receiving laser. The controller performs an inspection process by a result of measurement by the interferometer, the controller being configured to determine presence or absence of an anomaly of the workpiece in the inspection process. The controller is configured to perform a surface process before the inspection process, the controller being configured to irradiate the receive position with a pre-treatment laser in the surface process, the pre-treatment laser being the transmitting laser or the receiving laser.

An inspection method according to the present disclosure inspects a workpiece to be inspected. The inspection method includes: performing a surface process; and performing an inspection process on the workpiece after performing the surface process. The performing the inspection process includes irradiating a transmit position on a surface of the workpiece with a transmitting laser for generating an ultrasonic wave into the workpiece. The performing the inspection process includes irradiating a receive position on the surface of the workpiece with a receiving laser for detecting the ultrasonic wave. The performing the inspection process includes determining presence or absence of an anomaly of the workpiece by a result of interferometrical measurement of reflected light of the receiving laser. The performing the surface process includes irradiating the receive position with a pretreatment laser, the pre-treatment laser being the transmitting laser or the receiving laser.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram showing a configuration of an inspection apparatus according to Embodiment 1 of the present disclosure.
Fig. 2 is a diagram for illustrating a pretreatment.
Fig. 3 is a diagram for illustrating an inspection process.
Fig. 4 is a diagram showing waveforms in an inspection process, etc., according to Comparative Example.
Fig. 5 is a diagram showing waveforms during an inspection process, etc., according to the present embodiment.
Fig. 6 is a flowchart illustrating a primary process by the inspection apparatus.
Fig. 7 is a diagram for illustrating modifying cross sections for inspection.
Fig. 8 is a flowchart illustrating Example 1 of step S6 of Fig. 6.
Fig. 9 is a diagram showing Example 2 of step S6 of Fig. 6.
Fig. 10 is a diagram showing an inspection apparatus according to Embodiment 3.
Fig. 11 is a diagram showing a display image by an inspection apparatus according to Embodiment 4.

### DESCRIPTION OF THE PREFERRED EMBODIMENTS

Hereinafter, embodiments according to the present disclosure will be described, with reference to the accompanying drawings. Note that the same reference signs are used to refer to the same or like parts, and the description thereof will not be repeated. At least some of the configurations according to respective embodiments are originally intended to be combined as appropriate.

### <Embodiment 1>

### [Configuration of Inspection Apparatus]

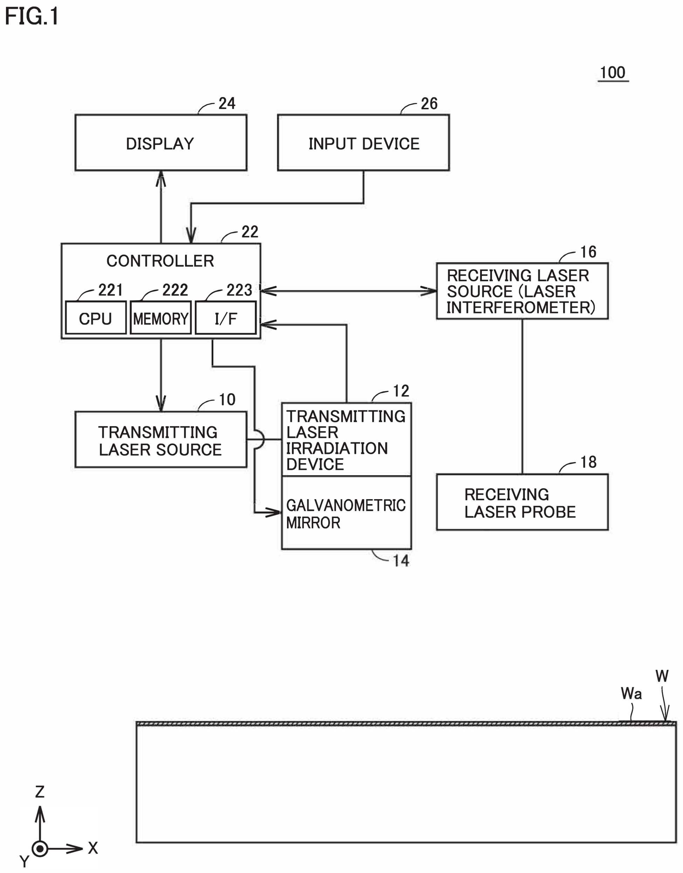

Fig. 1 is a diagram showing a configuration of an inspection apparatus 100, and a workpiece W, according to Embodiment 1 of the present disclosure. Inspection apparatus 100 according to the present disclosure can perform, in-process, a detection process for detecting an anomaly of workpiece W, including flaws inside and on the surface of workpiece W. Referring to Fig. 1, inspection apparatus 100 includes a transmitting laser source 10, a transmitting laser irradiation device 12, a galvanometric mirror 14, a receiving laser source 16, a receiving laser probe 18, a controller 22, a display 24, and an input device 26.

Workpiece W is held by a holding member (not shown). The direction of thickness of workpiece W will be referred to as a Z-axis direction, the width direction of workpiece W will be referred to as an X-axis direction, and the depth direction of workpiece W will be referred to as a Y-axis direction. Y-axis direction corresponds to a "first direction" according to the present disclosure, and X-axis direction intersecting with (orthogonal to) Y-axis direction corresponds to a "second direction" according to the present disclosure.

Transmitting laser source 10 produces excitation light for producing transmitting laser at transmitting laser irradiation device 12, and outputs the excitation light to transmitting laser irradiation device 12. Transmitting laser source 10 is configured of, for example, a laser diode (LD) power source.

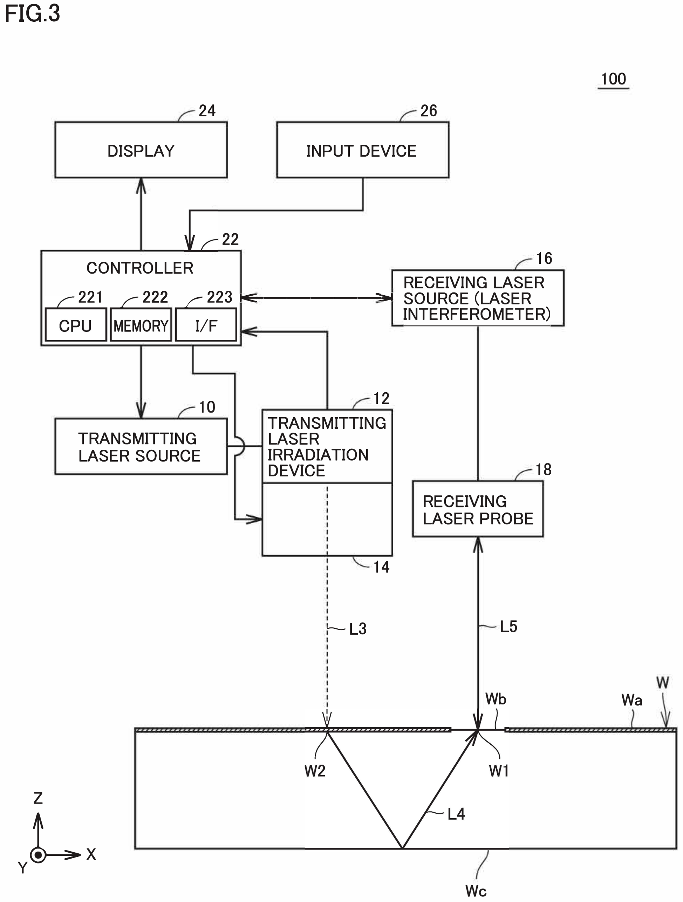

Transmitting laser irradiation device 12, upon receiving the excitation light from transmitting laser source 10, generates a transmitting laser, which is a pulse laser, and irradiates galvanometric mirror 14 with the transmitting laser. Transmitting laser irradiation device 12 includes a microchip laser for generating, for example, a YAG pulse laser. Galvanometric mirror 14 is a scanning mechanism capable of scanning an irradiation position of the transmitting laser in X-axis direction. A transmit position W2 (see Fig. 3 described below) on the surface of workpiece W is irradiated with the transmitting laser from galvanometric mirror 14. The transmitting laser is a laser for generating an ultrasonic wave into workpiece W.

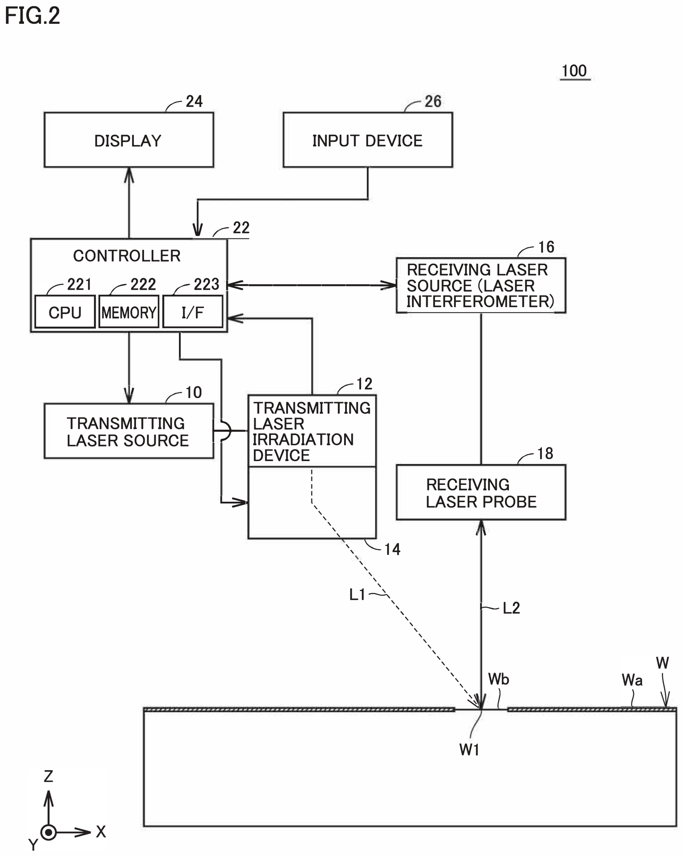

Receiving laser source 16 includes a laser interferometer. Receiving laser source 16 generates and outputs a receiving laser (reference light) to receiving laser probe 18. Receiving laser probe 18 irradiates a predetermined receive position W1 (see Figs. 2 and 3 described below) on the surface of workpiece W with the receiving laser. Receive position W1 will also be referred to as an ultrasonic wave receiving point.

Receiving laser probe 18 also receives the light of the receiving laser applied to and reflected off the surface of workpiece W, and outputs the reflected light to receiving laser source 16 (the laser interferometer). The laser interferometer of receiving laser source 16 detects interfering light comprising the reference light and the reflected light, and outputs a resulting signal indicating a result of interferometrical measurement to controller 22. The receiving laser is a laser for detecting the ultrasonic wave.

Controller 22 includes a central processing unit (CPU) 221, a memory 222, and an interface 223 for input or output of various signals. Memory 222 includes a random access memory (RAM) and a read only memory (ROM). CPU 221 deploys programs stored in the ROM for execution on the RAM. Various processes, which are performed by controller 22, are written in the programs stored in the ROM.

Initially, an inspection process performed by inspection apparatus 100 is described. Controller 22 controls transmitting laser source 10 in such manner that the transmitting laser source 10 generates the excitation light for producing the transmitting laser at transmitting laser irradiation device 12. Controller 22 also controls galvanometric mirror 14 in such a manner that the galvanometric mirror 14 scans the irradiation position of the transmitting laser in X direction. Controller 22 also receives, from transmitting laser irradiation device 12, the timing of oscillation of the transmitting laser (pulse irradiation timing) at transmitting laser irradiation device 12.

Controller 22, then, receives the resulting signal indicating the result of the interferometrical measurement of the receiving laser by the laser interferometer of receiving laser source 16 from receiving laser source 16, and determines the presence or absence of an anomaly of workpiece W, based on an intensity of the ultrasonic wave (the intensity of the surface vibrations) at the receiving laser irradiation position (the ultrasonic wave receiving point). In other words, inspection apparatus 100 identifies minute vibrations on the receiving point on the surface of workpiece W by the laser interferometer, thereby determining the presence or absence of an anomaly of workpiece W.

In this manner, inspection apparatus 100 performs the inspection process of determining the presence or absence of a defect of workpiece W by the result of the measurement by the interferometer. Inspection apparatus 100 also performs the inspection process for each of multiple cross sections that are orthogonal to Y-axis direction of workpiece W.

Display 24 is a display for showing results of various processes by controller 22. On display 24, for example, a measurement screen, called B-scope, is displayed showing a result of measurement of the ultrasonic wave inside an inspection target by inspection apparatus 100. B-scope shows the time of arrival of the ultrasonic wave, and the intensity of the ultrasonic wave, at a receiving laser irradiation position (the ultrasonic wave receiving point), depending on an irradiation position (an ultrasonic wave transmitting point) of the transmitting laser scanned in X-axis direction.

Input device 26 receives an input from a user. Controller 22 performs various processes, based on the input from the user. Controller 22 and display 24 are each configured of a personal computer (PC), for example.

Note that the transmitting laser irradiation device 12 corresponds to a "first irradiation device" according to the present disclosure. Receiving laser probe 18 corresponds to a "second irradiation device" according to the present disclosure.

### [Pretreatment and Inspection Process]

As described above, receiving laser probe 18 receives the light of the receiving laser applied to the receive position on the surface of workpiece W and reflected off the surface of workpiece W. In order for inspection apparatus 100 to detect an anomaly of workpiece W with high accuracy, preferably, controller 22 obtains the above resulting signal has a high signal/noise (S/N) ratio. In order to obtain the above resulting signal having a high S/N ratio, preferably, the receiving laser has an improved reception sensitivity.

In general, however, a lowering portion Wa for reducing the reflection percentage of the light of the receiving laser reflected off the workpiece W, is formed on the surface of workpiece W. For example, lowering portion Wa includes unevenness of the surface of workpiece W, and an oxide film or plating formed on the surface of workpiece W. Since lowering portion Wa is formed on the surface of workpiece W as such, the reflection percentage of the light of the receiving laser reflected off the surface of workpiece W is lowered. Note that the lowering portion Wa is shown hatched in Fig. 1, etc.

Thus, before the inspection process, inspection apparatus 100 according to the present disclosure performs a pretreatment for alter the surface profile of lowering portion Wa. The pretreatment includes a process of irradiating the receive position with a pre-treatment laser. The pre-treatment laser is the transmitting laser or the receiving laser. In the present embodiment, the pre-treatment laser is the transmitting laser. The pretreatment corresponds to a "surface process" according to the present disclosure.

Fig. 2 is a diagram for illustrating the pretreatment. In the pretreatment, transmitting laser irradiation device 12 irradiates receive position W1 with a pretreatment laser L1 (the transmitting laser) by a control of controller 22. As receive position W1 is irradiated with pre-treatment laser L1, receive position W1 is subjected to ablation or local melting, causing alteration to the surface properties of lowering portion Wa, and the laser reflection percentage at receive position W1 improves. Fig. 2 shows as an altered portion Wb as the portion of lowering portion Wa whose surface properties have been altered.

Fig. 3 is a diagram for illustrating the inspection process, which is performed after the pretreatment. As shown in Fig. 3, lowering portion Wa of receive position W1 is reduced by the pretreatment. In the inspection process, inspection apparatus 100 irradiates transmit position W2 with a transmitting laser L3 from above the workpiece W. In that case, the ultrasonic wave is generated to transmit position W2. The generated ultrasonic wave L4 passes through workpiece W, reflects off a lower surface Wc of workpiece W, and reaches the upper surface of workpiece W.

Inspection apparatus 100 also irradiates, with a receiving laser L5, receive position W1 at which the lowering portion Wa has been reduced. Controller 22 uses receiving laser L5 to measure micro vibrations occurred in the surface of workpiece W due to the ultrasonic wave having reached the upper surface of workpiece W. This measurement is interferometrical measurement using a laser interferometer. By this measurement, controller 22 measures the intensity (the signal strength) of the ultrasonic wave at receive position W1 of receiving laser L5.

Moreover, if an anomaly (e.g., a defect such as a blow hole inside the workpiece W) is present in workpiece W, scattering attenuation of the ultrasonic wave occurs. Accordingly, the intensity of ultrasonic wave L4 reached receive position W1 is less (ultrasonic wave L4 has greater attenuation) than when no anomaly is present. Accordingly, inspection apparatus 100 identifies the degree of attenuation of ultrasonic wave L4 reached the receive position W1, based on the resulting signal. Based on the degree of attenuation, inspection apparatus 100 can inspect the presence or absence of an anomaly of workpiece W. For example, if the degree of attenuation is greater than a predetermined threshold, inspection apparatus 100 determines that an anomaly is present in workpiece W. If the degree of attenuation is less than or equal to the threshold, inspection apparatus 100 determines that no anomaly is present in workpiece W.

### [Waveforms]

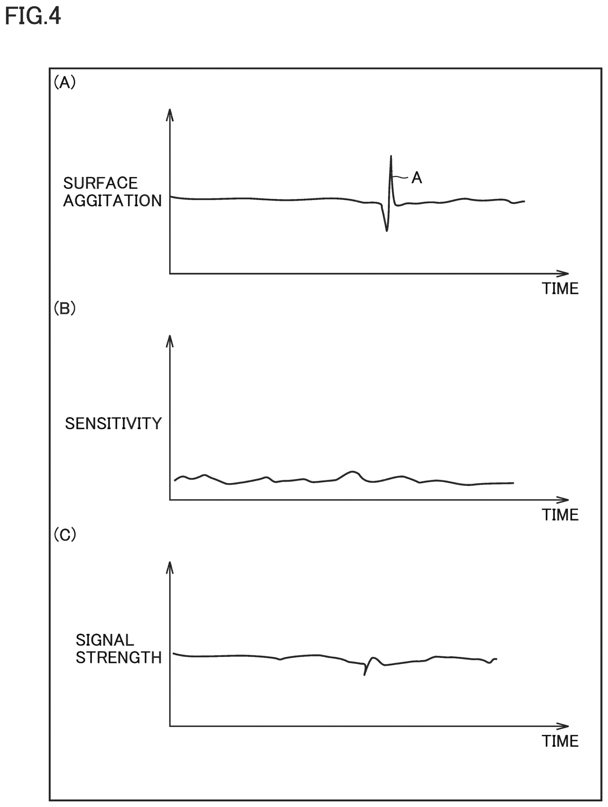

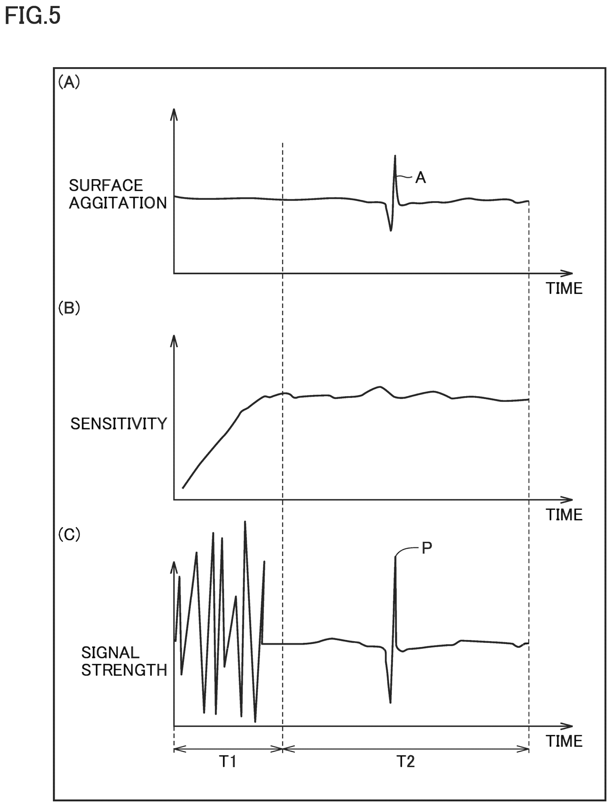

Figs. 4 and 5 are diagrams showing examples of waveforms related to the inspection process, etc. Fig. 4 shows waveforms during an inspection process according to Comparative Example in which the above pretreatment is not performed. Fig. 5 shows waveforms during the inspection process, etc. according to the present embodiment after the pretreatment.

Part (A) of Fig. 4 and (A) of Fig. 5 are diagrams each showing changes over time in agitation at a receiving point on a surface of a workpiece W. Point A in (A) of Fig. 4 and (A) of Fig. 5 indicates vibrations when the ultrasonic wave generated by the irradiation of the transmitting laser has reached receive position W1. Part (B) of Fig. 4 and (B) of Fig. 5 illustrate the sensitivity of the receiving laser. Part (C) of Fig. 4 and (C) of Fig. 5 illustrate the signal strength of the above resulting signal indicating a result of interferometrical measurement by the interferometer. Here, the signal strength of the resulting signal corresponds to a multiplied value of the agitation of the surface of the workpiece and the sensitivity of the receiving laser of the same time.

Moreover, a time period T1 in (C) of Fig. 5 is a period during which the pretreatment is being executed, and a time period T2 is a period during which the inspection process is being executed. Since receive position W1 is directly irradiated with the transmitting laser, the signal shape in the time period T1 is a significantly disrupted shape (a noise shape).

Since the inspection apparatus according to Comparative Example does not perform the above pretreatment, the receiving laser has low sensitivity, as shown in (B) of Fig. 4. Accordingly, in the inspection apparatus according to Comparative Example, the signal strength is low, and the anomaly inspection accuracy of workpiece W is low, as shown in (C) of Fig. 4.

Inspection apparatus 100 according to Embodiment 1, in contrast, performs the pretreatment in time period T1, thereby causing alteration to the surface properties of lowering portion Wa of workpiece W, and the laser reflection percentage of receive position W1 improves. Accordingly, the reception sensitivity of the receiving laser improves. Moreover, in connection with the reception sensitivity of the receiving laser, the signal strength can be increased as shown in (C) of Fig. 5. In the example of (C) of Fig. 5, a peak P of the signal strength is distinctively shown. Thus, inspection apparatus 100 can achieve improved accuracy of the process of inspection of workpiece W, as compared to the inspection apparatus according to Comparative Example.

As described above, according to inspection apparatus 100 of Embodiment 1, the pretreatment, in which the receive position W1 is irradiated with the transmitting laser used for the inspection process of workpiece W, is performed before the inspection process. In other words, inspection apparatus 100 can combine as transmitting laser irradiation device 12 for use in the inspection process and transmitting laser irradiation device 12 for use in the pretreatment. Accordingly, inspection apparatus 100 can increase the reflection percentage of the reflected light of the receiving laser through the pretreatment, thereby improving the reception sensitivity of the receiving laser, without having to add new parts (see (B) of Fig. 4 and (B) of Fig. 5). Thus, inspection apparatus 100 according to Embodiment 1 achieves an improved accuracy of the inspection process of workpiece W, while reducing the part count.

### [Flowchart]

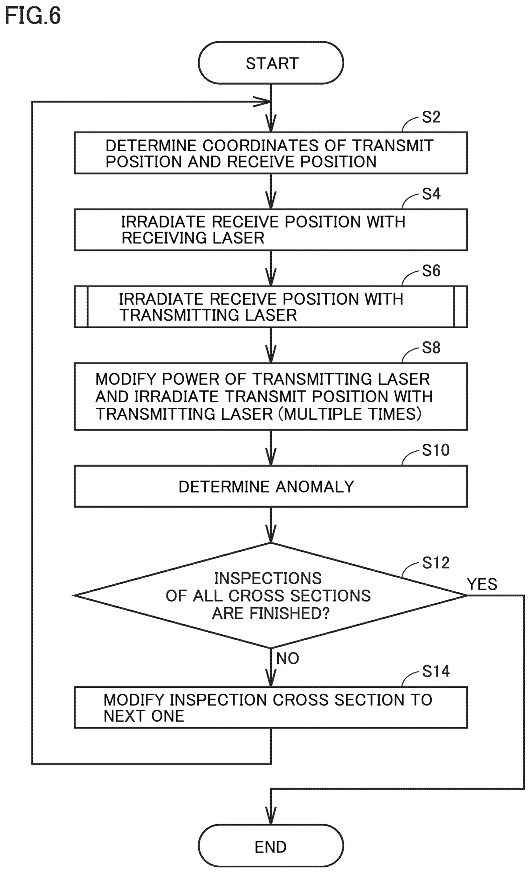

Fig. 6 is a flowchart illustrating a primary process by inspection apparatus 100. Initially, in step S2, inspection apparatus 100 determines the transmitting laser irradiation position (transmit position W2) and the receiving laser irradiation position (receive position W1), based on three-dimensional data of workpiece W. Furthermore, in step S2, inspection apparatus 100 determines the number of cross sections of workpiece W to inspect.

Next, in step S4, inspection apparatus 100 irradiates receive position W1 with the receiving laser. In the present disclosure, the irradiation with the receiving laser is kept on. Next, in step S6, inspection apparatus 100 irradiates receive position W1 with the transmitting laser. In step S6 according to Embodiment 1, inspection apparatus 100 irradiates receive position W1 once. This process of step S6 corresponds to the above-described pretreatment. Note that other examples of step S6 will be set forth in embodiments described below.

Next, in step S8, inspection apparatus 100 modifies the power of the transmitting laser for the pretreatment of step S6. Then, inspection apparatus 100 irradiates transmit position W2 with the transmitting laser whose power has been modified.

As such, in Embodiment 1, the power of the transmitting laser in the inspection process of step S8 and the power of the transmitting laser in the pretreatment of step S6 are different. Accordingly, inspection apparatus 100 can, since it changes the power of the transmitting laser for the pretreatment and the inspection process, flexibly perform the pretreatment and the inspection process.

Note that the power of the transmitting laser for the pretreatment may be higher or lower than the power of the transmitting laser for the inspection process. Moreover, at least one of the power of the transmitting laser for the pretreatment and the power of the transmitting laser for the inspection process may be designated by a user. For example, the user may enter a value of the power to input device 26. Note that, as a variation, the power of the transmitting laser for the pretreatment and the power of the transmitting laser for the inspection process may be the same.

Next, in step S10, inspection apparatus 100 performs an anomaly determination process. In the anomaly determination process, the presence or absence of an anomaly of workpiece W is detected, using the degree of attenuation described above. The anomaly determination process includes a process of measuring the intensity (the signal strength) of the ultrasonic wave, and a process of determining the presence or absence of an anomaly of workpiece W based on a result of the measurement.

Next, if the inspection of all the cross sections of workpiece W has not ended in step S12 (NO in step S12), inspection apparatus 100, in step S14, modifies an inspection cross section to the next inspection cross section.

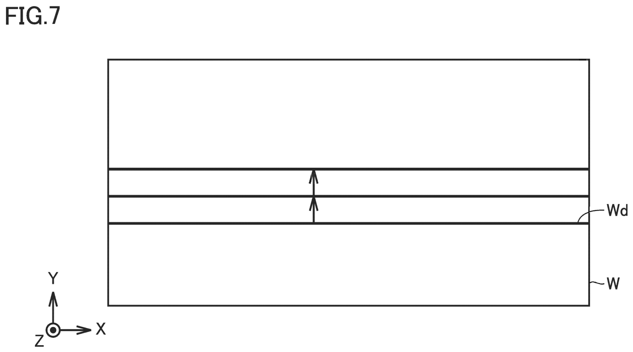

Fig. 7 is a diagram for illustrating changing inspection cross sections. Referring to Fig. 7, the modification process is a process for modifying receive position W1 and transmit position W2 (an inspection cross section Wd) in the inspection process to those on the Y-axis direction side. This modification process is a process of moving receive position W1 and transmit position W2 in Y-axis direction by modifying the positions of transmitting laser irradiation device 12 and receiving laser probe 18 relative to workpiece W.

The modification process is a process, which is performed by inspection apparatus 100, of moving workpiece W in Y-axis direction and moving at least one of transmitting laser irradiation device 12, galvanometric mirror 14, and receiving laser probe 18 in Y-axis direction.

If inspections of all the cross sections of workpiece W are finished (YES in step S12), the process of Fig. 6 ends.

Note that, in step S8, transmit position W2 may be irradiated with the transmitting laser multiple times as indicated in parentheses. In this case, in the anomaly determination process of step S10, inspection apparatus 100 determines the presence or absence of an anomaly of workpiece W, based on the above resulting signals obtained by the multiple irradiations. For example, inspection apparatus 100 calculates an average of values indicated by the multiple resulting signals and determines the presence or absence of an anomaly of workpiece W, based on the average.

### <Embodiment 2>

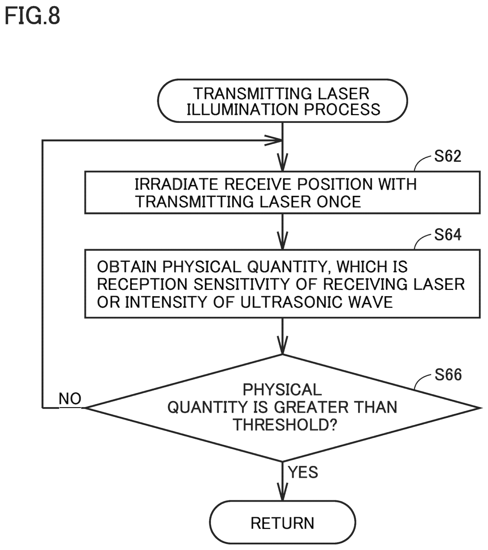

In Embodiment 2, other examples of step S6 of Fig. 6 are described. Fig. 8 is a flowchart illustrating Example 1 of step S6. Referring to Fig. 8, in step S62, an inspection apparatus 100 irradiates a receive position W1 with a transmitting laser once (by one pulse). Next, in step S64, inspection apparatus 100 detects a physical quantity in response to the irradiation of receive position W1 with the transmitting laser. Here, the physical quantity is "reception sensitivity of a receiving laser" or an "intensity of an ultrasonic wave detected using an interferometer."

Next, inspection apparatus 100 determines whether the detected physical quantity is greater than a predetermined threshold. If the physical quantity is less than or equal to the threshold (NO in step S66), the process returns to step S62. Then, inspection apparatus 100 repeats the processes of steps S62 and S64 until the physical quantity is greater than the threshold (YES in step S66).

As such, the pretreatment of step S6 includes a process of irradiating a receive position W1 with a pre-treatment laser until the physical quantity increases greater than the threshold. With such a configuration, the pretreatment ensures "the reception sensitivity of the receiving laser" or "the intensity of the ultrasonic wave detected using the interferometer," and the accuracy of the process of inspection of workpiece W can, therefore, be improved.

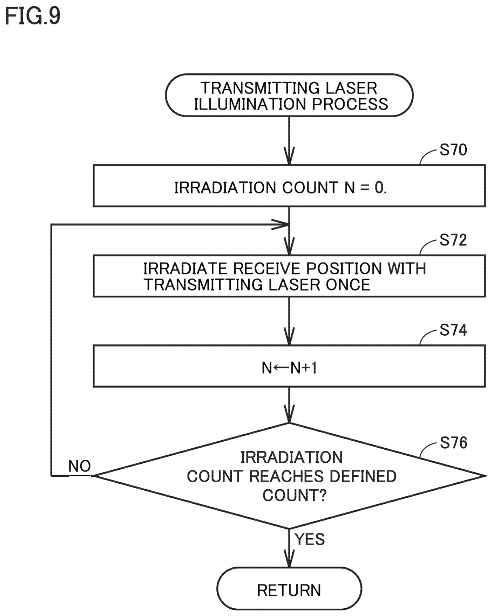

Fig. 9 is a diagram showing Example 2 of step S6. In Example 2, a transmitting laser irradiation count is used. Referring to Fig. 9, in step S70, inspection apparatus 100 sets (initializes) an irradiation count to 0. Next, in step S72, inspection apparatus 100 irradiates receive position W1 with the transmitting laser once (by one pulse).

Next, in step S74, inspection apparatus 100 increments the irradiation count by 1. Next, in step S76, inspection apparatus 100 determines whether the incremented irradiation count has reached a default value. If the irradiation count N has not yet reached the default value (NO in step S76), the process returns to step S72. Then, the processes of steps S72 and S74 are repeated until the irradiation count N reaches a defined count (YES in step S76). With such a configuration, the accuracy of the process of inspection of workpiece W can be improved by a simple process. Moreover, if the configuration is such that the process of Fig. 9 is performed as the process of step S6, inspection apparatus 100 is not required to irradiate the receiving laser during the process of step S6.

While receive position W1 is irradiated with the transmitting laser one in step S62 of Fig. 8 and step S72 of Fig. 9, it should be noted that inspection apparatus 100 may continue the irradiation of receive position W1 with the transmitting laser the processes of Figs. 8 and 9. In Fig. 8, where such a configuration is adopted, inspection apparatus 100 periodically performs the determination process of step S66 during the irradiation of receive position W1 with the transmitting laser.

Moreover, step S76 of Fig. 9, where the irradiation of receive position W1 with the transmitting laser, is a process of determination as to whether the duration of irradiation of receive position W1 with the transmitting laser has reached a defined period of time or not. In other words, the process of step S76 is a process of determination as to whether the amount of irradiation of receive position W1 with the transmitting laser has reached a predetermined constant amount of irradiation.

### <Embodiment 3>

The inspection process according to Embodiment 1 includes one transmitting laser irradiation position (transmit position W2), as shown in Fig. 3. In Embodiment 3, an inspection process includes multiple transmitting laser irradiation positions (transmit positions W2).

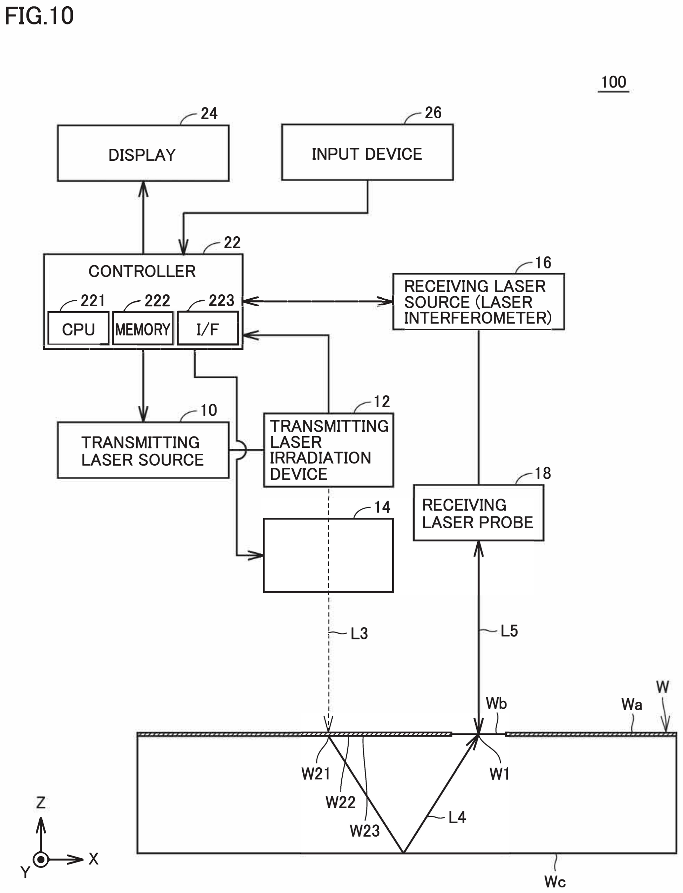

Fig. 10 is a diagram showing an inspection apparatus 100 according to Embodiment 3. As shown in Fig. 10, multiple transmit positions W2 along X-axis direction are shown. In the example of Fig. 10, transmit positions W21, W22, and W23 are shown as multiple transmit positions.

As such, in the inspection process, inspection apparatus 100, in step S8 (see Fig. 6), applies a transmitting laser across X-axis direction multiple times (each of the multiple transmit positions is irradiated with the transmitting laser). Then, in an anomaly determination process of step S10, the presence or absence of a defect of the workpiece is determined by a result of measurement by an interferometer based on the multiple irradiations with the transmitting laser. With such a configuration, the accuracy of inspection of an anomaly of workpiece W can be improved.

### <Embodiment 4>

In Embodiment 4, an inspection apparatus 100 displays an image corresponding to an inspection result on a display 24. For example, inspection apparatus 100 displays the image shown in (C) of Fig. 5, which is an image illustrating the intensity (the signal strength) of an ultrasonic wave. The image according to (C) of Fig. 5 includes a pretreatment image corresponding to the pretreatment, and an inspection image corresponding to the inspection process, as described above. Note that the pretreatment image is an image indicating the signal strength of a time period T1, and the inspection image is an image indicating the signal strength of a time period T2.

However, for a user of inspection apparatus 100, the level of importance of the inspection image is high, while the level of importance of the pretreatment image is low. Hypothetically, if the pretreatment image and the inspection image are displayed as illustrated in (C) of Fig. 5, an excessive amount of information is displayed, degrading the user viewability of the inspection image whose level of importance is high.

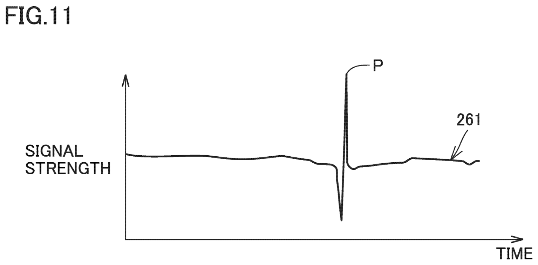

Inspection apparatus 100 determines the image running in step S6 as a pretreatment image, and the image running in step S8 as an inspection image. Fig. 11 is a diagram showing one example of an image displayed on display 24 by inspection apparatus 100 according to Embodiment 4. As shown in Fig. 11, inspection apparatus 100 according to Embodiment 4 displays an inspection image 261 whose level of importance is high, while not displaying a pretreatment image whose level of importance is low. In the example of Fig. 11, a peak P of an ultrasound signal strength having reached the receiving point of the surface of a workpiece W is shown.

According to Embodiment 4, the user viewability of the inspection image, whose level of importance is high, can be improved, as compared to a device displaying both the pretreatment image and the inspection image.

### <Other Embodiments>

The above-described inspection apparatus 100 has been described as using the transmitting laser as the pre-treatment laser. However, inspection apparatus 100 may use the receiving laser as the pre-treatment laser. For example, in the pretreatment of Fig. 2, receive position W1 is irradiated with the receiving laser output from receiving laser probe 18. Moreover, inspection apparatus 100 may set the power of the receiving laser for use in the pretreatment and the power of the receiving laser for use in the inspection process differently. For example, the power of the receiving laser for use in the inspection process may be greater than the power of the receiving laser for use in the pretreatment.

### <Clauses>

### [Clause 1]

An inspection apparatus that inspects a workpiece to be inspected, the inspection apparatus, comprising:
a first irradiation device that irradiates a transmit position on a surface of the workpiece with a transmitting laser for generating an ultrasonic wave into the workpiece;
a second irradiation device that irradiates a receive position on the surface of the workpiece with a receiving laser for detecting the ultrasonic wave;
an interferometer that interferometrically measures reflected light of the receiving laser; and
a controller that performs an inspection process by a result of measurement by the interferometer, the controller being configured to determine presence or absence of an anomaly of the workpiece in the inspection process, wherein
the controller is configured to perform a surface process before the inspection process, the controller being configured to irradiate the receive position with a pretreatment laser in the surface process, the pre-treatment laser being the transmitting laser or the receiving laser.
With such a configuration, before the inspection process, the surface process is performed of irradiating the receive position with the transmitting laser or the receiving laser which is used for the inspection process of the workpiece. Accordingly, the surface process can increase the reflection percentage of the reflected light of the receiving laser, thereby improving the reception sensitivity of the receiving laser, without having to add new parts for the surface process. Accordingly, the inspection process of the workpiece has improved accuracy while reducing the part count.

### [Clause 2]

The inspection apparatus according to Clause 1, wherein
the surface process includes a process of irradiating the receive position with the pre-treatment laser until a physical quantity increases greater than a predetermined threshold, the physical quantity being reception sensitivity of the receiving laser, or an intensity of the ultrasonic wave that is detected using the interferometer.

With such a configuration, the reception sensitivity of the receiving laser can be ensured by the surface process, and the accuracy of the inspection process of the workpiece can, therefore, be improved.

### [Clause 3]

The inspection apparatus according to Clause 1, wherein
the surface process includes a process of irradiating the receive position with the pre-treatment laser having a predetermined constant amount of irradiation.

With such a configuration, the accuracy of the inspection process of the workpiece can be improved by a somewhat simple surface process.

### [Clause 4]

The inspection apparatus according to any one of Clauses 1 to 3, wherein
the surface process includes a process of irradiating the receive position using the transmitting laser as the pre-treatment laser, and
power of the transmitting laser for the inspection process and power of the transmitting laser for the surface process are different.

With such a configuration, since the power of the transmitting laser is modified between the surface process and the inspection process, flexible surface process and inspection process can be performed.

### [Clause 5]

The inspection apparatus according to any one of Clauses 1 to 4, wherein
the inspection process includes:
a process of irradiating, multiple times, the workpiece with the transmitting laser across a width direction of the workpiece; and
a process of determining the presence or absence of the anomaly of the workpiece by the result of measurement by the interferometer based on irradiating, multiple times, the workpiece with the transmitting laser.

With such a configuration, since the process is performed of determining the presence or absence of the anomaly of the workpiece by the result of measurement by the interferometer based on irradiating, multiple times, the accuracy of the inspection process of the workpiece can be improved.

### [Clause 6]

The inspection apparatus according to any one of Clauses 1 to 5, wherein
the inspection apparatus has a display, and
the controller is configured to show an image corresponding to the inspection process on the display, without showing an image corresponding to the surface process on the display.

For the user of the inspection apparatus, the level of importance of the inspection image corresponding to the inspection process is high, while the level of importance of the pretreatment image corresponding to the surface process is low. Hypothetically, if the pretreatment image and the inspection image are displayed, an excessive amount of information is displayed, the user's clear view of the inspection image, whose level of importance is high, is impaired. In view of this point, the inspection apparatus displays the inspection image whose level of importance is high, while not displaying the pretreatment image whose level of importance is low. Accordingly, the inspection apparatus can allow the user to clearly, visually identify the inspection image.

While the embodiments according to the present disclosure have been described above, the presently disclosed embodiments should be considered in all aspects illustrative and not restrictive. The scope of the present disclosure is defined by the appended claims. All changes which come within the meaning and range of equivalency of the appended claims are to be embraced within their scope.

## Claims

1. An inspection apparatus (100) for inspecting a workpiece to be inspected, the inspection apparatus (100), comprising:
a first irradiation device (12) that irradiates a transmit position on a surface of the workpiece with a transmitting laser for generating an ultrasonic wave into the workpiece;
a second irradiation device (18) that irradiates a receive position on the surface of the workpiece with a receiving laser for detecting the ultrasonic wave;
an interferometer (16) that interferometrically measures reflected light of the receiving laser; and
a controller (22) that performs an inspection process by a result of measurement by the interferometer (16), the controller being configured to determine presence or absence of an anomaly of the workpiece in the inspection process, wherein
the controller (22) is configured to perform a surface process before the inspection process, the controller being configured to irradiate the receive position with a pre-treatment laser in the surface process, the pre-treatment laser being the transmitting laser or the receiving laser.

2. The inspection apparatus (100) according to claim 1, wherein
the surface process includes a process of irradiating the receive position with the pre-treatment laser until a physical quantity increases greater than a predetermined threshold, the physical quantity being reception sensitivity of the receiving laser, or an intensity of the ultrasonic wave that is detected using the interferometer (16).

3. The inspection apparatus (100) according to claim 1, wherein
the surface process includes a process of irradiating the receive position with the pre-treatment laser having a predetermined constant amount of irradiation.

4. The inspection apparatus (100) according to any one of claims 1 to 3, wherein
the surface process includes a process of irradiating the receive position using the transmitting laser as the pre-treatment laser, and
power of the transmitting laser for the inspection process and power of the transmitting laser for the surface process are different.

5. The inspection apparatus (100) according to any one of claims 1 to 3, wherein
the inspection process includes:
a process of irradiating, multiple times, the workpiece with the transmitting laser across a width direction of the workpiece; and
a process of determining the presence or absence of the anomaly of the workpiece by the result of measurement by the interferometer (16) based on irradiating, multiple times, the workpiece with the transmitting laser.

6. The inspection apparatus (100) according to any one of claims 1 to 3, wherein
the inspection apparatus (100) has a display (24), and
the controller (22) is configured to show an image corresponding to the inspection process on the display (24), without showing an image corresponding to the surface process on the display (24).

7. An inspection method for inspecting a workpiece to be inspected, the method comprising:
performing a surface process; and
performing an inspection process on the workpiece after performing the surface process; wherein
the performing the inspection process includes:
irradiating a transmit position on a surface of the workpiece with a transmitting laser for generating an ultrasonic wave into the workpiece;
irradiating a receive position on the surface of the workpiece with a receiving laser for detecting the ultrasonic wave; and
determining presence or absence of an anomaly of the workpiece by a result of measurement of reflected light of the receiving laser by an interferometer (16), wherein
the performing the surface process includes irradiating the receive position with a pre-treatment laser, the pre-treatment laser being the transmitting laser or the receiving laser.
